# EUROPEAN PATENT APPLICATION

(11) **EP 3 051 780 A1**
(43) Date of publication of application: **03.08.2016**
(21) Application number: 15305144.6
(22) Date of filing: 30.01.2015
(51) Int. Cl.: H04L 29/14

(54) **A method for changing by a first application a contactless activation state of a second application**

(71) Applicant: GEMALTO SA, 92190 Meudon (FR)
(72) Inventor: Ong, Hermanto, 92190 Meudon (FR); Ang, Harmony Stephanie, 92190 Meudon (FR); Rajagukguk, Ronald, 92190 Meudon (FR); Ngui, Junjie Daniel, 92190 Meudon (FR)
(74) Representative: Delaval, Guillaume Laurent

(57) **Abstract**

According to the invention, there is provided a method for changing by a first application a contactless activation state of a second application. The method comprises the following steps: initially requesting (400) by the first application to the second application a change of the contactless activation state from a contactless activatable state to a contactless non activatable state; if the second application fails to change its contactless activation state following the initial request because of an ongoing contactless session, activating (402) a notification service for the first application to be informed of the end of said ongoing contactless session; if the notification service is activated, notifying (403) the first application of the end of said ongoing contactless session; once the first application is notified of the end of the ongoing contactless session, requesting again (404) by said first application to the second application to change its contactless activation state.

## Description

### TECHNICAL FIELD

The present invention relates to a method for changing by a first application a contactless activation state of a second application, and is applicable to secure elements used for contactless transactions.

### BACKGROUND OF THE INVENTION

Mobile devices such as smartphones or tablet computers may be used for ticketing for public transportation or to carry out secured transactions using near field communication technologies.

MIFARE (trademark) is an example of contactless smartcard technology. MIFARE can be implemented into mobile devices by using a secure element. For that purpose, a set of technical specifications called MIFARE4Mobile describes how to manage MIFARE-based applications in the secure element of mobile NFC devices.

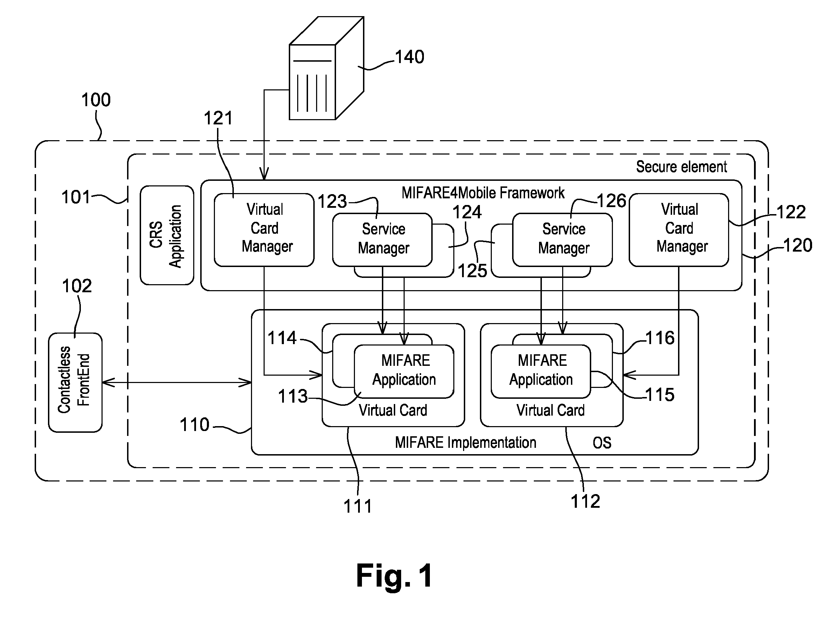

**Figure 1** provides an example of an implementation of MIFARE into a mobile device. This example is mainly based on the use of a secure element 101 cooperating with a contactless frontend 102 supporting NFC (Near Field Communication). The secure element 101 and the contactless frontend 102 are both located into the mobile device 100.

Secure elements are small devices comprising a memory, a microprocessor and an operating system for computing treatments. Such secure elements may comprise a plurality of memories of different types. They are called "secure" because they are able to control the access to the data they contain and to authorize or not the use of data by other machines. The secure elements may also provide computation services based on cryptographic components. In general, secure elements have limited computing resources and are intended to be connected to a host machine. Secure elements may be removable or fixed to a host device. Smart cards are portable secure elements.

The secure elements may embed an object-oriented virtual machine in order to be able to run applications written in an object-oriented language. Usually, these object-oriented applications manage applicative data which are stored into the secure element.

In this document, a secure element can be of any type. It can be for example embedded in the mobile device, a UICC (Universal Integrated Circuit Card), a MicroSD card or of any other type.

The MIFARE applications are loaded in virtual cards 111, 112 located in a MIFARE Implementation layer 110.

A MIFARE4Mobile Framework 120 enables the management of the MIFARE applications 113-116 and the virtual cards 111, 112. It comprises one or several virtual card managers 121, 122. A virtual card manager is a Java Card Application containing the logical representation of a Virtual Card which is physically implemented in the MIFARE Implementation 110. The MIFARE4Mobile Framework 120 also comprises one or several service managers 123-126.

A service manager is a Java Card application that is a logical representation of a MIFARE Application that is physically implemented in a Virtual Card residing in the MIFARE Implementation 110. It is mainly used for the remote management, the personalization and update of the MIFARE application, the retrieval of information and to enable and disable the MIFARE application on the contactless interface.

The remote management of the MIFARE applications and virtual cards can be delegated to a third party, called Trusted Service Manager (TSM). This TSM can manage one or several applications of the secure element 101 Over-The-Air (OTA), using for example an OTA server 140 to exchange application data with the secure element 101.

One problem may arise when considering the interaction between a first application acting as the manager of a second application. In one example of MIFARE, the first application may correspond to a service manager located in the MIFARE4Mobile framework 120 and the second application, managed by the first application, may correspond to a MIFARE application located in one of the virtual cards 111, 112 of the MIFARE Implementation layer 110.

Alternatively, in another example of MIFARE, the first application may correspond to a virtual card manager 121, 122 located in the MIFARE4Mobile framework 120 and the second application, managed by the first application, may correspond to a virtual card 111, 112 located in the MIFARE Implementation layer 110.

In this description, the contactless activation state is a state of an application defining its capability to set up and/or to participate to a contactless session. A contactless session corresponds to a period of time during which data can be exchanged using a wireless technology between an application located in a mobile device or in a secure element located in a mobile device and a terminal, for example an NFC reader.

A function of the first application 123 is to manage the contactless activation state of the second application 114. For that purpose, the OTA server 140 communicates with the first application 123. The second application 114 can establish a communication with another device, for example an NFC reader.

When the first application 123 managing the second application 114 receives a command from the OTA server 140 to disable the contactless activation state of the second application, this may not be possible if a contactless session is ongoing. As stated in the specification *"*MIFARE4Mobile - Architecture", section 5.2, Doc Rev 2.1.1, Final - 27 Oct 2014, when a contactless session is ongoing between a contactless terminal and a MIFARE virtual card, all Wallet or Remote Management commands requiring an access to the virtual card involved in the contactless session are rejected and an error indicating that a contactless transaction is ongoing is returned. In this case, the manager application, in the current standard, cannot disable the contactless activation state of the second application immediately as it is currently in the middle of a contactless session. A retry mechanism can be used, however, most of the existing solutions are inducing a significant signaling overhead between the MIFARE4Mobile Framework layer and the MIFARE Implementation layer 110 or may not be reliable enough. Therefore, there is a need of a mechanism to secure the change of contactless activation state of an application managed when a contactless session is ongoing.

### SUMMARY OF THE INVENTION

According to the present invention, there is provided a method for changing by a first application a contactless activation state of a second application, said method comprising the following steps:
- initially requesting by the first application to the second application a change of the contactless activation state from a contactless activatable state to a contactless non activatable state;
- if the second application fails to change its contactless activation state following the initial request because of an ongoing contactless session, activating a notification service for the first application to be informed of the end of said ongoing contactless session;
- if the notification service is activated, notifying the first application of the end of said ongoing contactless session;
- once the first application is notified of the end of the ongoing contactless session, requesting again by said first application to the second application to change its contactless activation state.

In one embodiment, said first and second applications are implemented in a secure element.

In one embodiment, the notification service is implemented by an operating system of the secure element.

In another embodiment, the notification service is implemented by the second application.

The notification service is, for example, activated by the first application by sending a registration message to the second application.

According to one aspect of the invention, the notification service is deactivated once it has been notified to the first application that the second application switched to the non-activatable state.

As an example, the first application is configured to communicate with an over-the-air server having the ability to monitor remotely said first application in order to change the contactless activation state of the second application.

In one embodiment, the secure element implements MIFARE technology, the first application being part of a MIFARE4Mobile framework and the second application of a MIFARE Implementation.

In one example, the first application is a service manager located in the MIFARE4Mobile framework and the second application is a MIFARE application located in a virtual card of the MIFARE Implementation layer.

In another example, the first application is a virtual card manager located in the MIFARE4Mobile framework and the second application is a virtual card located in the MIFARE Implementation layer.

The invention also concerns a secure element configured to implement the method described above.

The invention also concerns a mobile device adapted to cooperate with a secure element implementing the method described above.

The invention also concerns a computer program product for instructing a computer to perform the method described above.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 provides an example of an implementation of MIFARE into a mobile device;
- Figure 2 provides a first example of an existing retry mechanism for changing the contactless activation state of an application when an initial request occurred during an ongoing contactless session;
- Figure 3 provides a second example of an existing retry mechanism for changing the contactless activation state of an application when an initial request occurred during an ongoing contactless session;
- Figure 4 illustrates schematically a method implementing a retry mechanism for changing the contactless activation state of an application;
- Figure 5 illustrates an embodiment of the retry mechanism according to the invention for changing the contactless activation state of an application when an initial request occurred during an ongoing contactless session.

### DETAILED DESCRIPTION

The invention is described hereinafter in the context of MIFARE and MIFARE4Mobile. However, it is only for exemplifying purposes and is not considered to reduce the scope of the present invention. The invention is applicable to any system in which a secure element comprises a first application managing a contactless activation state of at least a second application.

Throughout the figures, the same reference numerals and characters, unless otherwise stated, are used to denote like features, elements, components or portions of the illustrated embodiments. Moreover, while the subject invention will now be described in detail with reference to the figures, it is done so in connection with the illustrative embodiments. It is intended that changes and modifications can be made to the described embodiments without departing from the true scope and spirit of the subject invention as defined by the appended claims.

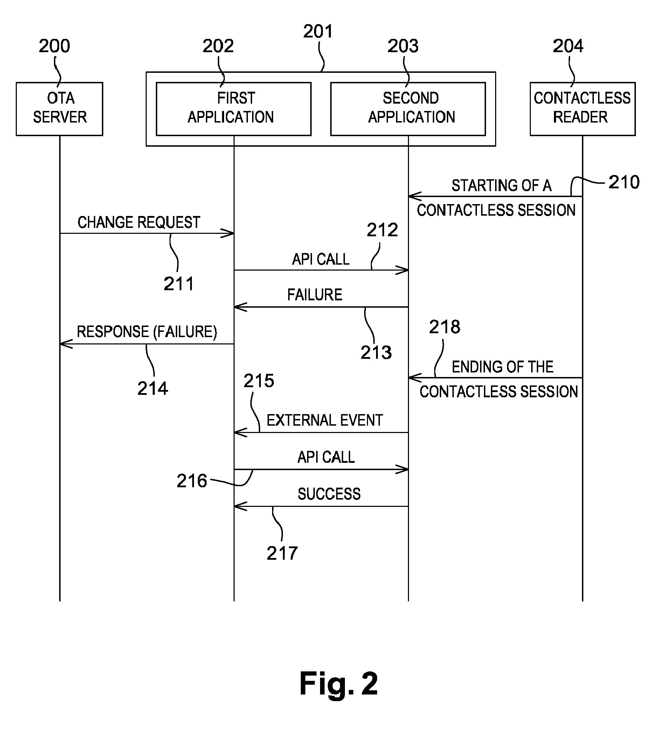

Figure 2 provides a first example of an existing retry mechanism for changing the contactless activation state of an application when an initial request occurred during an ongoing contactless session. An ongoing contactless session is a contactless session which is currently active.

In this example, an OTA server 200 communicates with a first application 202 of a secure element 201 cooperating with a mobile device. For example, the secure element can be embedded or inserted in the mobile device. The first application 202 is configured to manage the contactless activation state of a second application 203, that is to say to trigger the change of state when required. This second application 203 is able to interact with a contactless reader 204 thanks to the use of a contactless frontend, for example an NFC frontend (not represented). In an implementation of MIFARE, the first application 202 can be comprised in the MIFARE4Mobile framework layer as a service manager and the second application 203 can be comprised in the MIFARE Implementation layer as a MIFARE application (see figure 1 for example).

First, a contactless session starts 210 and then data can be exchanged between the second application 203 and the reader 204. Some times after the starting of this session, the OTA server 200 sends a request 211 to change the contactless activation state of the second application. The requested contactless activation state corresponds for example to a contactless non activatable state which means that no contactless session can be set up or to an contactless activatable state which means that a contactless session can be initiated and/or supported by the second application, involving for example a contactless reader 204. In other words, when in contactless activatable state, a contactless session can be either active or inactive.

This request 211 is received during the ongoing contactless session and processed in the secure element 201 by the first application 202. At this stage, the first application 202 does not know that there is a contactless session happening with the card. Therefore, upon reception of this request 211, the first application 202 calls 212 an application programming interface (API) function to change the contactless activation state of the second application 203. As there is an ongoing contactless session, the contactless activation state of the second application 203 cannot be changed, as stated in the MIFARE4Mobile specifications. As a response to the API call 212, the second application 203 or the operating system of the secure element responds to the first application 202 with a failure message 213 indicating that the contactless activation state has not been changed because of an ongoing contactless session.

The first application 202 then sends a response message 214 to the OTA server 200 indicating that the change of contactless activation state has failed. Further, the response may also indicate that the application will retry to change the contactless activation state. It is also possible for the first application 202 to send a response message 214 to the OTA server 200 indicating directly that the application will retry to change the contactless activation state and hence the request is deemed successful.

Upon reception of the failure message 213, a retry mechanism is activated. When this mechanism is activated, the first application 202 waits for a particular external event. Once this particular event is detected, a request for changing the contactless activation state of the second application 203 is resent. An example of particular event is the selection of the first application 202 or the reception by the first application 202 of another message from the OTA server 200.

In this scenario, the contactless session ends 218 shortly after the response 214.

The operating system sends a selection message 215 to the first application 202 as it received a Select APDU (Application Protocol Data Unit).

In this example, this selection message 215 comprising an application identifier (AID) is considered as a particular external event by the retry mechanism implemented by the first application 202. Therefore, the first application 202 calls an API function 216 in order to change the contactless activation state of the second application 203.

Since the contactless session has ended 218, the change of contactless application state can be successfully carried out and an acknowledgment message 217 indicating that the contactless activation state has been successfully modified is sent by the second application 203 to the first application 202.

One of the main drawbacks of this approach is that the first application 202 may wait indefinitely for a particular external event and therefore never be triggered.

In that case, a new contactless session may be set up by the second application 203 as its contactless activation state is still ACTIVATABLE despite the fact that this is a situation to be avoided as a change request 211 has been previously emitted by the OTA server 200.

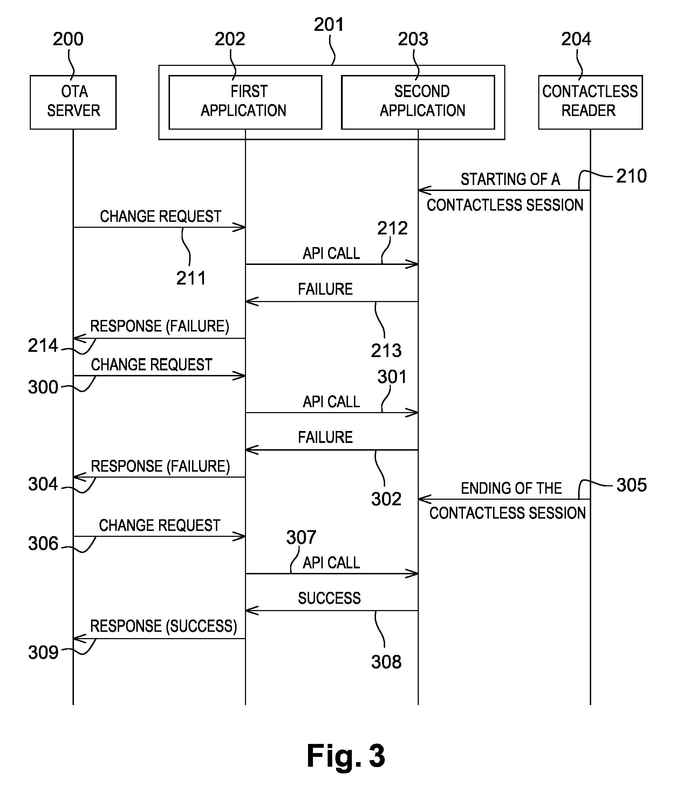

Figure 3 provides a second example of an existing retry mechanism for changing the contactless activation state of an application when an initial request occurred during an ongoing contactless session.

In this example, the retry mechanism is implemented by the OTA server 200 to make sure the contactless activation state of the second application 203 is NON ACTIVATABLE.

Following the initial request 211 for changing the contactless activation state of the second application 203 and the response 214 indicating that the state could not be changed, the server will resend 300 a change request message. Therefore, an API function will be called 301 by the first application 202 to change the contactless activation state of the second application 203, and as in this example the contactless session is still ongoing, a second failure message 302 will be received by the first application 202.

A response 304 indicating the failure will then be sent to the OTA server 200 by the first application 202. When decided by the OTA server 200, a third change request 306 will be sent to the first application 202, once more, an API function will be called to change the contactless activation state of the second application 203 and as the contactless session ended previously 305, a response indicating the success of the change of contactless activation state is transmitted 308 to first application 202 and another message indicating the success is then sent 309 to the OTA server 200.

In this example, when the OTA server 200 receives a failure message 214, 304, it will keep on sending a change request, for example after waiting a predetermined amount of time, until it receives a successful response 309.

This technique is not efficient as it implies a significant signaling overhead between the OTA server 200 and the secure element 201.

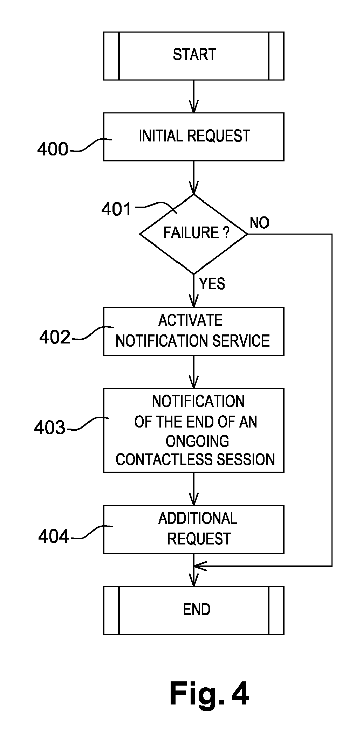

Figure 4 illustrates schematically a method implementing a retry mechanism for changing the contactless activation state of an application.

The proposed method aims at changing by a first application a contactless activation state of a second application from a contactless activatable state to a contactless non activatable state. In a preferred embodiment, the first and second applications are implemented in a secure element.

When the contactless activation state of the second application is said "contactless non activatable state", no contactless session can be set up or supported by this application. When the contactless activation state of the second application is said "contactless activatable state", a contactless session can be initiated and/or supported by the second application. In other words, when in contactless activatable state, a contactless session can be either active or inactive. However, when in contactless non activatable state, a contactless session cannot be started.

The method comprises a first step 400 for initially requesting by the first application to the second application a change of the contactless activation state from the contactless activatable state to the contactless non activatable state.

Then, if 401 the second application fails to change its contactless activation state following the initial request because of an ongoing contactless session, a step activates 402 a notification service for the first application 202 to be informed of the end of said ongoing contactless session.

If the notification service is activated, a step notifies 403 the first application 202 of the end of said ongoing contactless session. The notification service can be implemented by the second application or elsewhere in the operating system of the secure element.

Once the first application 202 is notified of the end of the ongoing contactless session, it is requested again 404 by said first application 202 to the second application 203 to change its contactless activation state.

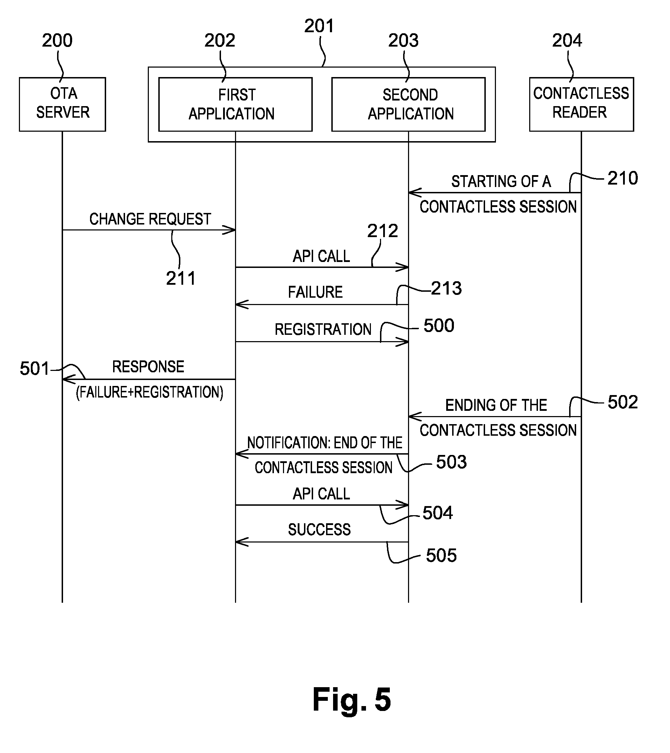

Figure 5 illustrates an embodiment of the retry mechanism according to the invention for changing the contactless activation state of an application when an initial request occurred during an ongoing contactless session.

As a reminder, in this description, the application designated as the first application manages the contactless activation state of another application designated as the second application.

In this example, the first application 202 receives a response 213 from the second application 203 indicating a failure in changing the contactless activation state because of an ongoing contactless session. This response follows an initial request 212 sent by the first application 202 to the second application 203.

In one embodiment, the receiving of a failure response 213 following an initial request to change the contactless activation state of the second application 203 triggers the registration 500 of the first application 202 to a notification service provided by the second application 203. This service aims at informing the first application 202 of the end of an ongoing contactless session.

In an alternative embodiment, the notification service can be provided by the operating system of the secure element, and not specifically by the second application 203.

One of the main advantages of the registration is that the notification service is activated only when required, for example during an ongoing contactless session. This optimizes the number of function call and messages exchanged between the OTA server, the first and the second application.

Once registered to the aforementioned service, the first application 202 can send a message to the OTA server 200 as a response to the change request 211 indicating that the change of contactless activation state failed and that the first application 202 is registered to the notification service provided by the second application 203.

Alternatively, the notification service can be automatically activated by the second applet when the change of contactless activation state failed. One advantage is that the registration message 500 is not anymore required.

Shortly after, the ongoing contactless session ends 502. As the first application 202 is registered to the notification service, the operating system hosting the second application 203 sends a notification message 503 indicating the end of the ongoing contactless session. As the first application 202 is now informed of the end of the contactless session, it sends another request 504 to change the contactless activation of the second application, for example calling an API function. As there is no more active contactless session, the second application 203 is able to change its contactless activation state from

ACTIVATABLE to NON ACTIVATABLE.

From that point in time, the second application 203 cannot establish and/nor be involved in any contactless session. It sends back an acknowledgement message 505 indicating that the contactless activation state has been successfully changed.

From an implementation point of view, the secure element operating system can provide a set of API corresponding for example to a single class and single interface. The class will contain a static function to be called by the first application 202 which wants to be informed of an event corresponding to the start or the end of a contactless session. The interface corresponds for example to a single function that needs to be implemented by the first application.

The function of the interface implemented by the first application will be called when one HCl (Host Controller Interface) event is detected.

The notification service can be used for notifying to the first application when an ongoing contactless session ends.

Alternatively, it can be used for notifying to the first application when a contactless session starts and when it ends. In that case, two events are required.

A first event EVT_FIELD_ON indicates that the contactless session has started.

A second event EVT_FIELD_OFF indicates that the contactless session has ended.

To differentiate between the notification of the beginning and the end of a contactless session, the implemented function may comprise a single parameter to inform the application of the cause of the function call. In the case of a power loss occurring during a contactless session when the EVT_FIELD_OFF has not been yet received, then at the next boot up, the secure element operating system will call the first application to inform that there was a failure in the previous session. In this case, the event which will be sent by the secure element operating system is EVT_FIELD_OFF.

In one embodiment, once the first application received one of the events EVT_FIELD_ON or EVT_FIELD_OFF, it is of the responsibility of the first application to register or to unregister from the notification service. For example, if the first application did not unregister from the notification service after the end of a contactless session, the secure element operating system hosting the second application will keep on calling the first application at each event occurrence. A solution to avoid this situation is to unregister the first application from the notification service once it is triggered, i.e. notified of the end of a contactless session for example. By doing this, the mechanism for changing the contactless activation state of the second application will be simplified, in particular when the first application faces a failure response following an initial request.

The proposed method has the advantage to limit the number of retry for changing the contactless activation state of the second application. According to the invention, the change of state will be reinitiated only when the first application will be sure of the end of the ongoing contactless session, and a success is guaranteed on this case.

Additionally, the method according to the invention allows optimizing the signaling by eliminating unnecessary communication step between the server and the application to trigger the retry mechanism.

## Claims

1. A method for changing by a first application (202) a contactless activation state of a second application (203), said first and second applications being implemented in a secure element (201), said method comprising the following steps:
- initially requesting (400, 212) by the first application (202) to the second application (203) a change of the contactless activation state from a contactless activatable state to a contactless non activatable state;
- if (401) the second application (203) fails to change its contactless activation state following the initial request (212) because of an ongoing contactless session, activating (402) a notification service for the first application (202) to be informed of the end of said ongoing contactless session;
- if the notification service is activated, notifying (403) the first application (202) of the end of said ongoing contactless session;
- once the first application (202) is notified of the end of the ongoing contactless session, requesting again (404) by said first application (202) to the second application (203) to change its contactless activation state.

2. A method according to claim 1, wherein said first and second applications are implemented in a secure element.

3. A method according to claim 2, wherein the notification service is implemented by an operating system of the secure element.

4. A method according to any of the preceding claims, wherein the notification service is implemented by the second application (203).

5. A method according to any of the preceding claims, wherein the notification service is activated by the first application (202) by sending a registration message (500) to the second application (203).

6. A method according to any of the preceding claims, wherein the notification service is deactivated once it has been notified to the first application that the second application switched to the non-activatable state.

7. A method according to any of the preceding claims, wherein the first application (202) is configured to communicate with an over-the-air server (200) having the ability to monitor remotely said first application (202) in order to change the contactless activation state of the second application (203).

8. A method according to any of the preceding claims, wherein the secure element (201) implements MIFARE technology, the first application (202) being part of a MIFARE4Mobile framework (120) and the second application (203) of a MIFARE Implementation (110).

9. A method according to claim 8, wherein the first application (202) is a service manager located in the MIFARE4Mobile framework (120) and the second application (203) is a MIFARE application located in a virtual card (111, 112) of the MIFARE Implementation layer (110).

10. A method according to claim 8, wherein the first application (202) is a virtual card manager (121, 122) located in the MIFARE4Mobile framework (120) and the second application (203) is a virtual card (111, 112) located in the MIFARE Implementation layer (110).

11. A secure element configured to implement the method according to any of the preceding claims.

12. A mobile device adapted to cooperate with a secure element according to claim 11.

13. A computer program product for instructing a computer to perform the method of any of claims 1 to 10.
